# EUROPEAN PATENT APPLICATION

(11) **EP 4 502 379 A1**
(43) Date of publication of application: **05.02.2025**
(21) Application number: 23779907.7
(22) Date of filing: 22.03.2023
(51) Int. Cl.: F04B 39/00, F04C 29/00, H02K 3/46, H02K 3/50

(54) **ELECTRIC COMPRESSOR AND METHOD FOR ASSEMBLING ELECTRIC COMPRESSOR**

(30) Priority: 29.03.2022 JP 2022052910
(71) Applicant: Valeo Japan Co., Ltd., Kumagaya-Shi SAITAMA 360-0193 (JP)
(72) Inventor: MOTOHASHI, Shunichiro, Kumagaya-shi Saitama 360-0193 (JP); HADAS, Rostislav, 10800 Prague (CZ); BELLET, Augustin, 78320 Le Mesnil Saint Denis (FR); TAKAMA, Kazuki, Kumagaya-shi Saitama 360-0193 (JP); CUI, Kai, Kumagaya-shi Saitama 360-0193 (JP)
(74) Representative: Valeo Systèmes Thermiques
(86) International application number: PCT/JP2023/011102
(87) International publication number: WO 2023/189893

(57) **Abstract**

[Problem] To avoid contact between a cluster block and a housing and improve protection performance in an electric compressor in which a stator core is fixed inside a bottomed cylindrical housing.

[Solution] An electric compressor 10 comprises: a cylindrical stator core 111 which is positioned inside a bottomed cylindrical housing 20 at an interval from a bottom wall 21 thereof and is fixed to an inner circumferential surface 20a of the housing 20; a connection terminal 116 which is disposed on the bottom wall 21 side and is connected to a coil 114; a sealed terminal 130 penetrating the bottom wall 21; and a cluster block 120 covering a connecting portion 116a between the connection terminal 116 and the sealed terminal 130 and disposed in a space Sp between the bottom wall 21 and the stator core 111. The cluster block 120 has a mating portion 125 capable of mating along an axis CL1 of the rotor 102 with a holding jig 150 for holding the cluster block 120 in a state of being positioned with a gap ga from the bottom wall 21.

## Description

### [Technical Field]

The present invention relates to an improved electric compressor in which a motor for driving a compression mechanism is housed in a bottomed cylindrical housing, and an improved method for assembling an electric compressor.

### [Background Art]

Electric compressors include those of the "closed on the control unit side" type, in which a stator core of a motor is fixed to an inner circumferential surface of a bottomed cylindrical housing, and a control unit (a motor drive circuit such as an inverter) for controlling driving of the motor is provided on an outer wall surface of a bottom wall of the housing. For example, the technology of Patent Document 1 is known as such an electric compressor.

According to the electric compressor known from Patent Document 1, motor wiring leading out from a coil end of a coil wound around a stator core, and a conduction member (corresponding to a sealed terminal) connected to a motor drive circuit are connected by a connection terminal. The connection terminal is accommodated in a cluster block. This cluster block is disposed in a space between the bottom wall of the housing and the coil end. The conduction member protrudes into the housing from the outer wall surface side of the bottom wall through a through-hole, and is connected to the connection terminal by insertion into the cluster block.

The procedure for assembling the conduction member with the connection terminal in the cluster block is as follows.

The stator core is first of all fixed inside the housing. The cluster block accommodating the connection terminal is positioned, together with the motor wiring, between the coil end of the stator core and the bottom wall of the housing.

A pressing jig is then inserted inside the cylindrical stator core from an opening side of the housing. At this point, the pressing jig and the cluster block are positioned in relation to each other by mating of a pin and a hole.

The cluster block is then pressed against the bottom wall of the housing by means of the pressing jig. The cluster block is in a state of being sandwiched between the pressing jig and the bottom wall.

Lastly, the conduction member protrudes into the housing from the outer wall surface side of the bottom wall, and connects with the connection terminal inside the cluster block by means of insertion.

A fixing structure employing an "interference fit" exists as a configuration for fixing the stator core to the inner circumferential surface of the bottomed cylindrical housing. A process employing a shrink fit is an example of an interference fit. According to a shrink fit process, an inner diameter of the housing is formed slightly smaller than an outer diameter of the stator core, the housing is thermally expanded by being placed in a high-temperature state, and the normal-temperature stator core is fitted into the thermally-expanded housing, after which the housing is returned to normal temperature whereby the housing contracts and the stator core can be fixed in the housing.

### [Prior Art Documents]

### [Patent Documents]

[Patent Document 1] JP 2020-182337 A

### [Summary of the Invention]

### [Problems to be Solved by the Invention]

It would be feasible to use the shrink fit process as the configuration for fixing the stator core to the inner circumferential surface of the bottomed cylindrical housing in the electric compressor of the "closed on the control unit side" type which is known from Patent Document 1. However, a certain amount of care is needed in regard to contact between the heated housing and the cluster block when the stator core is fitted into the heated housing.

The present invention has been devised in order to solve the difficulty above, and the problem addressed by the present invention lies in providing technology for an electric compressor in which a stator core is fixed inside a bottomed cylindrical housing, wherein contact between a cluster block and the housing is avoided so that protection performance can be improved.

### [Means for Solving the Problems]

The reference symbols used in the appended drawings are added in parentheses in the description below in order to make the present invention easier to understand, but this does not limit the present invention to the forms depicted.

The present invention provides an electric compressor comprising: a compression mechanism (50) for compressing a gas, a motor (100) for driving the compression mechanism (50), a control unit (140) for controlling driving of the motor (100), and a housing (20) which is a bottomed cylindrical member for internally housing the motor (100); the control unit (140) being provided on an outer wall surface (21a) of a bottom wall (21) of the housing (20); the motor (100) comprising a rotor (102) whose rotational axis is aligned with a longitudinal direction of the housing (20), and a cylindrical stator (103) disposed radially outside the rotor (102); the stator (103) including: a cylindrical stator core (111) which is positioned with a space from the bottom wall (21) and is also fixed to an inner circumferential surface (20a) of the housing (20), a coil (114) wound around the stator core (111), and a connection terminal (116) which is disposed on the bottom wall (21) side and is electrically connected to the coil (114); a sealed terminal (130) which is provided in and penetrates the bottom wall (21) of the housing (20) and also electrically connects the control unit (140) and the stator (103); and a connecting portion (116a) between the connection terminal (116) and the sealed terminal (130) being covered by a cluster block (120; 220) which is disposed in a space (Sp) between the bottom wall (21) and the stator core (111), the electric compressor being characterized in that the cluster block (120; 220) has a mating portion (125; 225) capable of mating along an axis (CL1) of the rotor (102) with a holding jig (150; 250) for holding the cluster block (120; 220) in a state of being positioned with a gap (ga) from the bottom wall (21).

The cluster block has the mating portion enabling mating so that the cluster block can be held by the holding jig by means of a frictional force therebetween. The cluster block in a state of being positioned with a gap from the bottom wall of the housing can therefore be held in an optimum state by means of the holding jig without inclination. Accordingly, the cluster block can be appropriately arranged so as not to contact the housing. For example, even if the structure for fixing the stator core to the inner circumferential surface of the housing comprises fixing by means of an interference fit employing a shrink fit process, the position of the cluster block can be held by means of the holding jig so that the cluster block does not contact the heated housing. Performance in terms of protecting the cluster block can be improved as a result.

Mating of the mating portion (125; 225) with the holding jig (150; 250) preferably constitutes a mating configuration capable of holding a mated state by means of a frictional force therebetween and also enabling detachment from each other by means of a detaching force.

Mating of the mating portion with the holding jig constitutes a "light press fit", which is mating capable of holding the mated state by means of a frictional force therebetween and also enabling detachment from each other by means of a detaching force. The cluster block can therefore be stably held by means of the holding jig in the space between the bottom wall and the stator core while also being removable and accurately positionable.

Preferably, the cluster block (120; 220) comprises a facing surface (123a) facing the stator (103); the stator (103) further comprises an insulator (112) which is provided on an end face (111a) of the stator core (111) on the control unit (140) side, and is sandwiched between the stator core (111) and the coil (114); and the insulator (112) comprises an outer circumferential-side first support face (112d) and an inner circumferential-side second support face (112e) capable of supporting the facing surface (123a) of the cluster block (120; 220).

The facing surface of the cluster block can therefore be supported (movement of the cluster block can be restricted) by means of the first and second support faces of the insulator when the holding jig is withdrawn after the stator core has been fixed to the inner circumferential surface of the housing. Accordingly, it is easy to withdraw the holding jig from the cluster block.

Moreover, the cluster block is supported at the two locations of the outer circumferential-side first support face and the inner circumferential-side second support face, and the cluster block can therefore be stably supported. Consequently, the cluster block which is disposed toward the axial direction of the rotor (the radially inner side of the rotor) can be stably supported by means of the insulator so that the cluster block does not contact the inner circumferential surface of the heated housing.

Additionally, the cluster block can be supported in the axial direction (a direction along the center line of the stator core) by means of the first and second support faces when the sealed terminal is inserted into the connection terminal of the cluster block. Consequently, the sealed terminal can be easily assembled with the connection terminal.

Preferably, the facing surface (123a) of the cluster block (120; 220) is positioned up to a radially inner side of the cylindrical stator core (111); and the mating portion (125; 225) is configured by recessed mating recesses (126, 126; 226, 227) formed on a radially inside part (123b) of the facing surface (123a).

A mating distance on a part of the facing surface of the cluster block facing the stator cannot be set to a long distance because the overall length of the electric compressor is reduced by bringing the stator and the cluster block close together. However, the mating distance on the radially inside part can be set longer to an extent that there is no interference with the end face of the rotor, which therefore stabilizes the position and attitude of the cluster block, enabling very accurate positioning.

Preferably, the mating recesses (126, 126) are configured by a pair of arc-shaped grooves centered on the axis (CL1) of the rotor (102), and are positioned at a circumferential interval (Ln1) from each other.

The pair of arc-shaped grooves are mated with the holding jig whereby it is possible to restrict relative movement of the cluster block with respect to the holding jig in both a direction orthogonal to the axis of the rotor and a rotation direction about the axis of the rotor. The cluster block can therefore be positioned very accurately in relation to the holding jig.

Preferably, the mating recesses (226, 227) are configured by a pair of holes, and are positioned at an interval (Ln3) from each other.

The pair of holes are mated with the holding jig whereby it is possible to restrict relative movement of the cluster block with respect to the holding jig in both the direction orthogonal to the axis of the rotor and the rotation direction about the axis of the rotor. The cluster block can therefore be positioned very accurately in relation to the holding jig. Moreover, the mating recesses are configured by the pair of holes and therefore have a simple construction.

Preferably, a cluster block receiving portion (28) for receiving the cluster block (120; 220) is formed on an inner wall surface (21b) of the bottom wall (21) of the housing (20); and the cluster block (120; 220) is disposed in the cluster block receiving portion (28).

The cluster block can therefore be very efficiently assembled by effectively utilizing the narrow space inside the housing. It is therefore possible to achieve a reduction in the size of the electric compressor.

The present invention furthermore provides a method for assembling an electric compressor (10; 200) comprising: a compression mechanism (50) for compressing a gas; a motor (100) for driving the compression mechanism (50), the motor (100) comprising a rotor (102), a cylindrical stator core (111) of a stator (103) disposed radially outside the rotor (102), an insulator (112) provided on an end face (111a) of the stator core (111), and a coil (114) wound around the stator core (111) and the insulator (112); a housing (20) which is a bottomed cylindrical member having the stator core (111) fixed to an inner circumferential surface (20a) thereof; a control unit (140) which is provided on an outer wall surface (21a) of a bottom wall (21) of the housing (20) and controls driving of the motor (100); a connection terminal (116) which is disposed on an inner wall surface (21b) side of the bottom wall (21) and is electrically connected to the coil (114); a sealed terminal (130) which is attached to the bottom wall (21) of the housing (20) and penetrates the bottom wall (21) while also electrically connecting the control unit (140) and the stator (103); and a cluster block (120; 220) which is disposed in a space (Sp) between the bottom wall (21) and the insulator (112) and covers a connecting portion (116a) between the connection terminal (116) and the sealed terminal (130), the cluster block (120; 220) comprising a mating portion (125; 225) capable of mating along an axis (CL1) of the rotor (102) with a holding jig (150; 250) for holding the cluster block (120; 220),
the method for assembling an electric compressor being characterized by comprising: a step in which the stator (103) comprising the cluster block (120; 220) is prepared;
after this, a step in which the holding jig (150; 250) is inserted into the mating portion (125; 225) of the cluster block (120; 220) so that the cluster block (120; 220) is positioned with a gap (ga) from the bottom wall (21) of the housing (20), and the cluster block (120; 220) is held by the holding jig (150; 250);
after this, a step in which the housing (20) in a state of having been thermally expanded by means of heating is fitted to the stator (103) in a state in which the cluster block (120; 220) is held by means of the holding jig (150; 250);
after this, a step in which the housing (20) is returned to normal temperature and thereby contracted so that the stator core (111) is fixed to the housing (20); and
after this, a step in which the holding jig (150; 250) is detached from the mating portion (125; 225) of the cluster block (120; 220).

The cluster block has the mating portion enabling mating so that the cluster block can be held by the holding jig. The cluster block in a state of being positioned with a gap from the bottom wall of the housing can therefore be held in an optimum state by means of the holding jig without inclination. Accordingly, when the stator core is fixed to the heated housing by means of shrink fitting, the cluster block can be appropriately arranged so as not to contact the heated housing. Performance in terms of protecting the cluster block can be improved as a result. Moreover, the mating portion of the cluster block is mated to an extent that the holding jig can be detached from the mating portion.

Mating of the mating portion with the holding jig can thus be afforded by a "light press fit", which is mating capable of holding the mated state and also enabling detachment from each other by means of a detaching force. The cluster block can therefore be stably held by means of the holding jig in the space between the bottom wall and a first insulator while also being removable and accurately positionable.

### [Effects of the Invention]

The present invention makes it possible to improve protection performance in relation to difficulties caused by a cluster block contacting a bottomed cylindrical housing in an electric compressor in which a stator core is fixed inside the housing.

### [Brief Description of the Drawings]

[Fig. 1] is a view in cross section of an electric compressor according to example 1.
[Fig. 2] is an enlargement around the cluster block shown in fig. 1.
[Fig. 3] is an oblique view of the stator and cluster block shown in fig. 1, as seen from the control unit side.
[Fig. 4] is an exploded diagram around the housing, first insulator and cluster block shown in fig. 2.
[Fig. 5] Fig. 5(a) is a view in cross section omitting a second bearing, as seen from the direction of the line 5a-5a in fig. 1, and fig. 5(b) is a view in cross section omitting the bottom plate from the cluster block shown in fig. 5(a).
[Fig. 6] Fig. 6(a) is a view in cross section of an example in which the cluster block is supported by the first insulator, and fig. 6(b) is a view in cross section of another example in which the cluster block is supported by the first insulator.
[Fig. 7] Fig. 7(a) is an oblique view of the support configuration shown in fig. 6(a) as seen from the inside of the stator, and fig. 7(b) is an oblique view of the support configuration shown in fig. 7(a) as seen from the outside of the stator.
[Fig. 8] is an exploded diagram showing a relationship of the holding jig and the cluster block shown in fig. 4.
[Fig. 9] Fig. 9(a) is a view in cross section showing a relationship of the holding jig with the support configuration comprising the first insulator and the cluster block shown in fig. 7(a), fig. 9(b) is a view in cross section along the line 9b-9b in fig. 9(a), and fig. 9(c) is a bottom view of the cluster block shown in fig. 9(a).
[Fig. 10] Fig. 10(a) is an explanatory diagram illustrating a preparation step and a holding step, and fig. 10(b) is an explanatory diagram illustrating a fitting step.
[Fig. 11] Fig. 11(a) is an explanatory diagram illustrating a fixing step, and fig. 11(b) is an explanatory diagram illustrating a detachment step.
[Fig. 12] is an exploded diagram showing a relationship of the holding jig and the cluster block of an electric compressor according to example 2 (corresponding to fig. 8).
[Fig. 13] Fig. 13(a) is an exploded diagram illustrating a relationship of the mating portion and the holding jig shown in fig. 12, and fig. 13(b) is a view in cross section illustrating a mated state of the mating portion and the holding jig shown in fig. 13(a).

### [Embodiments of the Invention]

Embodiments of the present invention will be described below with reference to the appended drawings. It should be noted that the forms depicted in the appended drawings are examples of the present invention, and the present invention is not limited to those forms.

### <Example 1>

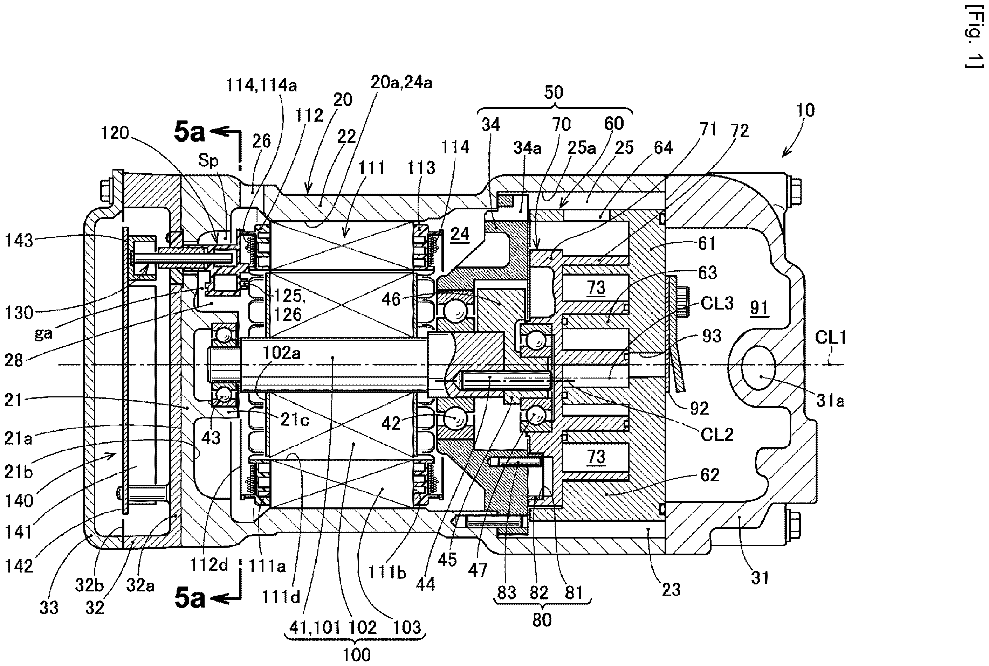

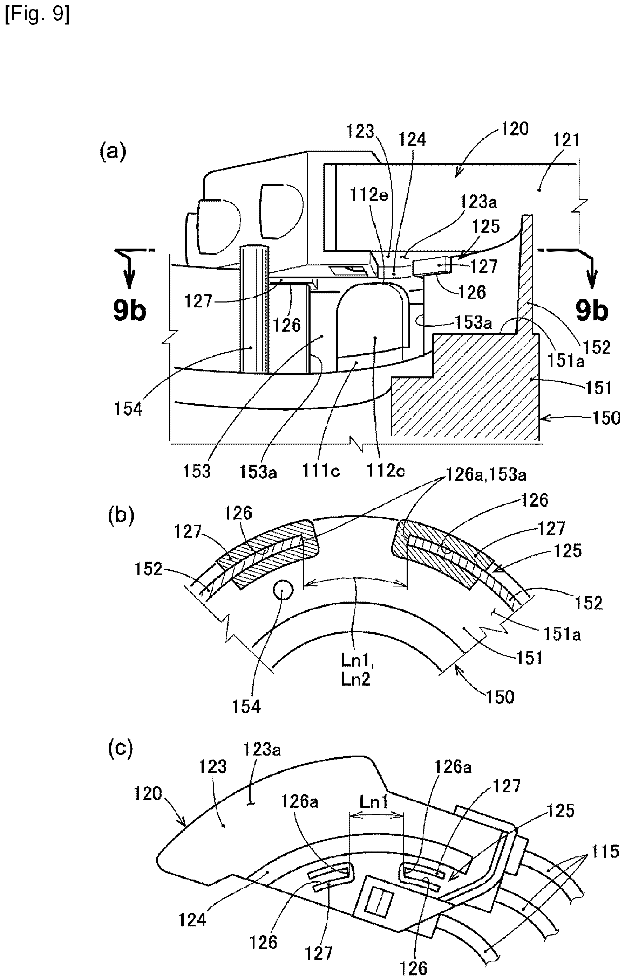

An electric compressor 10 according to example 1 will be described with reference to fig. 1-11.

As shown in fig. 1, the electric compressor 10 is suitable for use in a refrigeration cycle employing a refrigerant as a working fluid, and is employed in the refrigeration cycle of an automotive air conditioning device, for example. It should be noted that there is no limitation to the purpose of use of the electric compressor 10.

The electric compressor 10 comprises, for example: a housing 20 which can be installed horizontally; a compression mechanism 50 for compressing a gas (e.g., a gaseous refrigerant); a motor 100 for driving the compression mechanism 50; and a control unit 140 for controlling driving of the motor 100. The control unit 140 is configured by an inverter device for supplying driving electrical power to the motor 100, for example.

The housing 20 is a bottomed cylindrical member comprising a bottom wall 21 and a circumferential wall 22, and is closed at one end by means of the bottom wall 21 and completely open at another end. That is to say, an opening portion 23 is provided at the other end of the housing 20. The opening portion 23 is closed by an openable/closable head member 31. The housing 20 is constructed by a cast piece made of a metallic material such as aluminum (including aluminum alloy).

An outer wall surface 21a and an inner wall surface 21b of the bottom wall 21 of the housing 20 are flat surfaces. A bottomed cylindrical control housing 32 is assembled with the outer wall surface 21a. That is to say, a bottom wall 32a of the control housing 32 is placed over the outer wall surface 21a of the bottom wall 21 of the housing 20 and is also fastened to the bottom wall 21 by means of a fastening member. The control unit 140 is accommodated in the control housing 32. As a result, the control unit 140 is provided on the outer wall surface 21a of the bottom wall 21 of the housing 20. An opening portion 32b of the control housing 32 is closed off by means of an openable/closable lid 33. The control unit 140 will be described in detail later.

The housing 20 internally comprises a first accommodating chamber 24 on the bottom wall 21 side and a second accommodating chamber 25 on the opening portion 23 side. The first and second accommodating chambers 24, 25 are continuous in a longitudinal direction (axial direction) of the housing 20. A first inner circumferential surface 24a of the first accommodating chamber 24 and a second inner circumferential surface 25a of the second accommodating chamber 25 are circular about a center line CL1 in the longitudinal direction of the housing 20. The second inner circumferential surface 25a has a larger diameter than the first inner circumferential surface 24a.

The compression mechanism 50 is at least partly (e.g., completely) accommodated on the opening portion 23 side inside the housing 20, i.e., in the second accommodating chamber 25. The motor 100 is accommodated on the bottom wall 21 side inside the housing 20, i.e., in the first accommodating chamber 24.

The housing 20 further comprises an intake port 26 for taking the refrigerant into the first accommodating chamber 24 from the outside. The head member 31 comprises: an oil separation chamber 31a for separating oil from the refrigerant compressed by means of the compression mechanism 50; and a discharge port (not depicted) for discharging to the outside the gaseous refrigerant from which the oil has been separated by means of the oil separation chamber 31a.

A partition is formed between the first accommodating chamber 24 and the second accommodating chamber 25 by means of a disc-shaped partition member 34 (also referred to as a drive shaft support member 34). The partition member 34 restricts both relative rotation and relative movement in the axial direction with respect to the housing 20. Moreover, the drive shaft support member 34 is fixed to the housing 20 after the motor 100 has been housed in the housing 20.

The first accommodating chamber 24 may also be referred to below as the "low-pressure chamber 24". The partition member 34 comprises a plurality of intake holes 34a providing communication between the first accommodating chamber 24 and the second accommodating chamber 25. The partition member 34 may be considered as a component of the compression mechanism 50. Even if the partition wall 34 is considered as part of the compression mechanism 50, this does not depart from the essential point of the present invention.

A drive shaft 41 positioned on the center line CL1 in the longitudinal direction of the housing 20 is provided in the first accommodating chamber 24. The drive shaft 41 includes both a configuration in which it also serves as an output shaft 101 (motor shaft 101) of the motor 100, and a configuration in which it is a separate member (not depicted) from the output shaft 101 of the motor 100. In the description given here, the drive shaft 41 is configured to also serve as the output shaft 101 of the motor 100. The center line CL1 in the longitudinal direction of the housing 20 may also be referred to as the "center line CL1 of the drive shaft 41 (output shaft 101)".

The drive shaft 41 penetrates the partition member 34 toward the compression mechanism 50 side, and is rotatably supported by means of a first bearing 42 provided in the partition member 34 and a second bearing 43 provided in a bearing holding portion 21c in the bottom wall 21 of the housing 20. The drive shaft 41 further comprises an eccentric shaft 44 on one end face penetrating the partition member 34. The eccentric shaft 44 extends from one end face of the drive shaft 41 toward the compression mechanism 50 and is parallel with the drive shaft 41. A center line CL2 of the eccentric shaft 44 is offset from the center line CL1 of the drive shaft 41. An annular bush 45 is rotatably mated with the eccentric shaft 44. A radially-protruding counterweight 46 is integrally provided with the bush 45. An inner circumferential surface of a third bearing 47 is mated with an outer circumferential surface of the bush 45.

The compression mechanism 50 will be described next.

As shown in fig. 1, the compression mechanism 50 is configured, for example, by a "scroll compression mechanism" which compresses a gas (e.g., a gaseous refrigerant) by means of a combination of a fixed scroll 60 which is supported between the head member 31 and the partition member 34 in such a way as to be incapable of relative rotation, and an orbiting scroll 70 capable of orbiting in the circumferential direction in relation to the fixed scroll 60.

The fixed scroll 60 comprises a disc-shaped fixed panel 61, a cylindrical outer circumferential wall 62, and a spiral-shaped fixed spiral wall 63. The fixed panel 61 is orthogonal to the center line CL2 of the eccentric shaft 44. The outer circumferential wall 62 extends from an outer circumferential edge of the fixed panel 61 to the motor 100 side. A refrigerant intake port 64 for taking the refrigerant from radially outward to inward is formed in the outer circumferential wall 62. The fixed spiral wall 63 is positioned on the inner side of the outer circumferential wall 62 and stands upright from the bottom surface of the fixed panel 61.

The orbiting scroll 70 is capable of revolving about the fixed scroll 60. The orbiting scroll 70 comprises a disc-shaped orbiting panel 71 positioned opposite the fixed spiral wall 63, and a spiral-shaped orbiting spiral wall 72.

The orbiting panel 71 is orthogonal to a center line CL3 of the orbiting scroll 70, is positioned on the inner side of the outer circumferential wall 62 of the fixed scroll 60, and is rotatably supported by means of the eccentric shaft 44. The orbiting spiral wall 72 stands upright from the orbiting panel 71 toward the fixed spiral wall 63, and a plurality of compression chambers 73 are formed by combining the orbiting spiral wall 72 and the fixed spiral wall 63. Rotation of the drive shaft 41 enables the orbiting scroll 70 to revolve (eccentrically rotate) about the center line CL1 of the drive shaft 41.

The compression mechanism 50 further comprises a rotation preventing mechanism 80 for preventing the orbiting scroll 70 from rotating itself. The rotation preventing mechanism 80 is a pinand-ring type rotation preventing mechanism comprising: a plurality of recesses 81 provided in the orbiting panel 71; a plurality of ring members 82 mating with the plurality of recesses 81; and a plurality of rotation-stopping pins 83 extending into the plurality of ring members 82 from the partition member 34. Linear contact of the plurality of ring members 82 and the plurality of rotation-stopping pins 83 makes it possible to allow the orbiting scroll 70 to orbit while preventing rotation thereof.

As described above, rotation of the drive shaft 41 causes the orbiting scroll 70 to revolve. As a result, the refrigerant taken in from the intake port 26 passes through the gap in the motor 100 inside the low-pressure chamber 24, and is taken into the compression chambers 73 through the refrigerant intake port 64 of the fixed scroll 60 via the intake holes 34a in the partition member 34. As the orbiting scroll 70 revolves, the compression chambers 73 steadily moved toward the center while reducing the internal volume. The refrigerant inside the compression chambers 73 is compressed by this means. When the pressure in the compression chambers 73 increases to above an opening pressure of a discharge valve 92, the discharge valve 92 opens due to a pressure difference. The refrigerant inside the compression chambers 73 flows into a discharge chamber 91 through a discharge hole 93. The refrigerant inside the discharge chamber 91 is discharged to the outside from a discharge port (not depicted) via the oil separation chamber 31a.

The motor 100 will be described next.

As shown in fig. 1, the motor 100 is configured by a three-phase AC brushless motor, for example. The motor 100 comprises: the output shaft 101 (drive shaft 41), a rotor 102 fixed to the output shaft 101, and a cylindrical stator 103 surrounding the circumference of the rotor 102.

The rotor 102 has the longitudinal direction of the housing 20 as its axial center (rotational center), and is capable of rotating about the center line CL1 of the output shaft 101.

The stator 103 is disposed radially outside the rotor 102 and is fixed to an inner circumferential surface 20a of the housing 20 (first inner circumferential surface 24a of the first accommodating chamber 24). The stator 103 comprises: a cylindrical stator core 111, first and second insulators 112, 113 provided at both end faces 111a, 111b of the stator core 111, and coils 114 wound around the stator core 111 and the first and second insulators 112, 113. The center line CL1 of the output shaft 101 may also be referred to below as the "center line CL1 of the stator core 111".

The first and second insulators 112, 113 have a smaller outer diameter than the outer diameter of the stator core 111. A clearance is provided between the inner circumferential surface 20a (first inner circumferential surface 24a) of the housing 20 and the first and second insulators 112, 113.

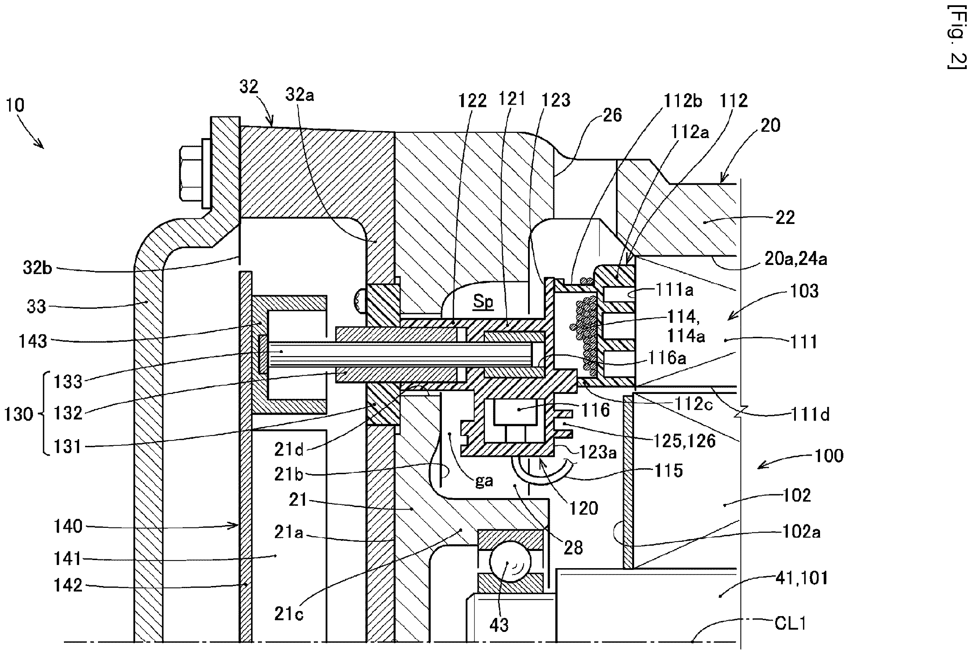

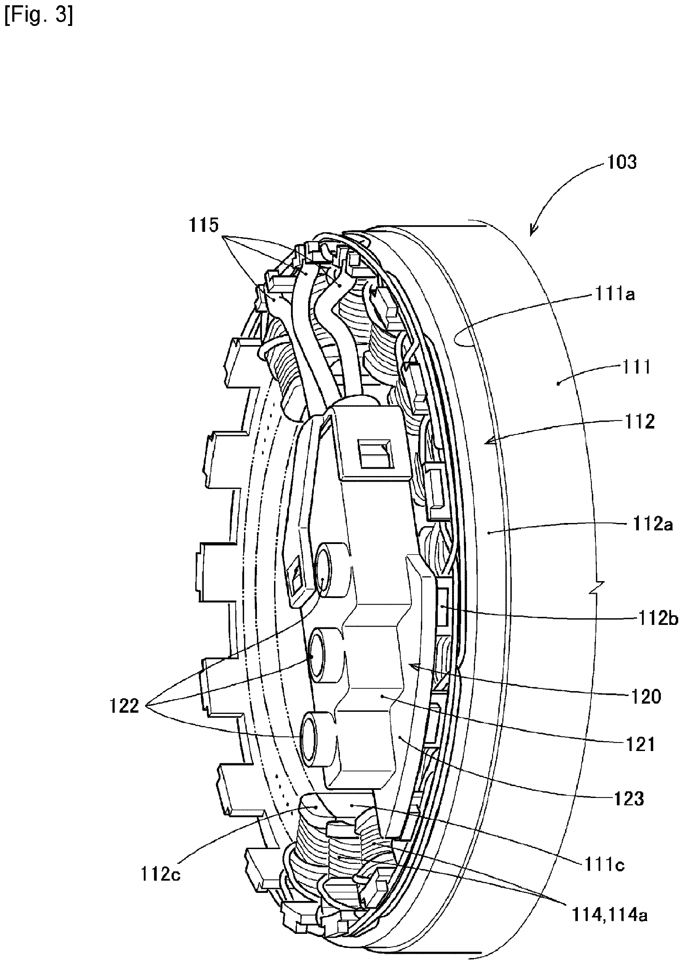

As shown in fig. 2 and 3, the stator core 111 is configured by a laminate of ferromagnetic plates such as magnetic steel plates, and is positioned with a space from the bottom wall 21 of the housing 20 while also being fixed to the inner circumferential surface 20a (first inner circumferential surface 24a) of the housing 20. A plurality of teeth 111c (see fig. 3) protruding toward the center line CL1 of the stator core 111 are formed on a radially inner surface of the stator core 111. The teeth 111c are arrayed at an equal pitch in the circumferential direction of the stator 103. The coils 114 are wound around the plurality of teeth 111c.

As shown in fig. 2 and 3, the first insulator 112 (first insulating body 112) is an annular member provided on the end face 111a of the stator core 111 on the control unit 140 side, and is configured by an electrically insulating resin molded part. The first insulator 112 exhibits the same shape as the stator core 111 (including the plurality of teeth 111c) when the stator core 111 is viewed along the center line CL1.

The first insulator 112 is an integrally molded component comprising: an annular base portion 112a which can be placed over and attached to the end face 111a of the stator core 111; a plurality of first edge portions 112b extending from an outer circumferential edge of the base portion 112a toward the bottom wall 21 of the housing 20; and a plurality of second edge portions 112c extending from an inner circumferential edge of the base portion 112a toward the bottom wall 21.

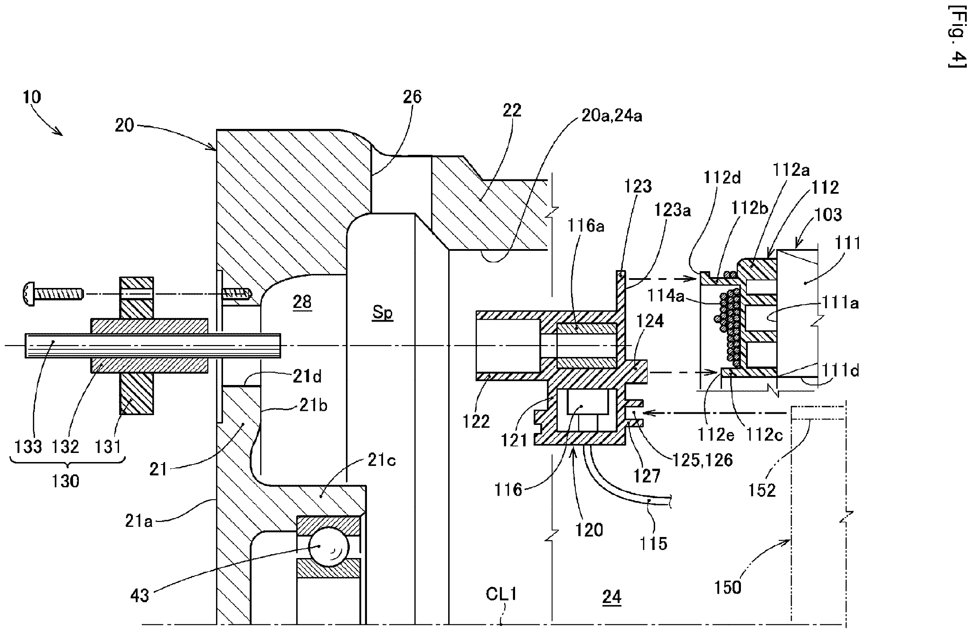

See also fig. 4. The plurality of first edge portions 112b (edge portions 112b on the outer circumferential side) are arrayed at a predetermined pitch in the circumferential direction while also extending along the center line CL1 of the stator core 111. The plurality of second edge portions 112c (edge portions 112c on the inner circumferential side) are arrayed on an extension of the plurality of teeth 111c along the center line CL1 of the stator core 111. Tip end faces 112d of the first edge portions 112b may be referred to as the "outer circumferential-side first support face 112d". Furthermore, tip end faces 112e of the second edge portions 112c may be referred to as the "inner circumferential-side second support face 112e". The first support face 112d and the second support face 112e face the inner wall surface 21b of the bottom wall 21 of the housing 20.

The coils 114 are wound between the base portion 112a, the first edge portions 112b, and the second edge portions 112c of the first insulator 112. Coil ends 114a of the coils 114 on the first insulator 112 side are positioned between the base portion 112a, the first edge portions 112b, and the second edge portions 112c. The coil ends 114a are parts of the coils 114 that protrude along the center line CL1 (in the axial direction) from the stator core 111 to the bottom wall 21 side. The first insulator 112 is thus provided on the end face 111a of the stator core 111 on the control unit 140 side and is sandwiched between the stator core 111 and the coils 114.

As shown in fig. 1, the second insulator 113 (second insulating body 113) has the same configuration as the first insulator 112, being an annular member provided on the end face 111b of the stator core 111 on the compression mechanism 50 side, and being configured by an electrically insulating resin molded part. The second insulator 113 exhibits the same shape as the stator core 111 when the stator core 111 is viewed along the center line CL1.

As shown in fig. 2 and 3, a plurality of lead-out wires 115 (motor wiring 115) leading out from the coil ends 114a of the coils 114 wound around the stator core 111 are positioned on the bottom wall 21 side of the first insulator 112 and also extend to the control unit 140 side.

A connecting structure between the lead-out wires 115 and the control unit 140 will be described next.

As shown in fig. 2-4, the plurality of lead-out wires 115 are connected to respective connection terminals 116 (receptacles 116). The connection terminals 116 are disposed on the first insulator 112 side (disposed on the bottom wall 21 side). The connection terminals 116 are thus electrically connected to the coils 114 and also assembled with a cluster block 120 (electrical connector 120).

As shown in fig. 2-4, the cluster block 120 is disposed in a space Sp between the bottom wall 21 and the first insulator 112, i.e., in the space Sp between the bottom wall 21 and the stator core 111. The cluster block 120 is configured by an electrically insulating resin molded part comprising: a terminal accommodating portion 121 for accommodating the connection terminals 116; and a plurality of cylindrical terminal protectors 122 extending from the terminal accommodating portion 121 to the control housing 32 side. The terminal protectors 122 communicate with the inside of the terminal accommodating portion 121 and are inserted into through-holes 21d penetrating the bottom wall 21. The outer diameter of the terminal protectors 122 is smaller than the inner diameter of the through-holes 21d. As a result, a clearance is formed between the through-holes 21d and the terminal protectors 122.

A sealed terminal 130 (relay terminal 130) comprising a plurality of terminal pins 133 is connected to the cluster block 120. The sealed terminal 130 comprises: a base plate 131 attachable to the bottom wall 21 from the outer wall surface 21a side; electrically insulating tubular insulating members 132 penetrating and fixed to the base plate 131; and conductive bar-shaped terminal pins 133 inserted through and fixed to the insulating member 132. The insulating members 132 are inserted into the terminal protectors 122 of the cluster block 120. The terminal pins 133 extend along the center line CL1 of the stator core 111 from inside the control housing 32 to inside the housing 20.

As shown in fig. 2 and 4, the terminal pins 133 are detachably inserted into connecting portions 116a of the connection terminals 116, whereby the sealed terminal 130 can electrically connect the stator 103 and the control unit 140. The connecting portion 116a between the connection terminal 116 and the sealed terminal 130, i.e., the connecting portion 116a between the terminal pin 133 and the connection terminal 116, is covered by the cluster block 120. The sealed terminal 130 penetrates the bottom wall 21 of the housing 20 and is removably attached to the bottom wall 21 from the outer wall surface 21a side.

As shown in fig. 2, configurations are included where the control unit 140 is provided directly or indirectly on the outer wall surface 21a of the bottom wall 21 of the housing 20. According to one example, the control unit 140 is indirectly provided on the outer wall surface 21a of the bottom wall 21 of the housing 20 by removably accommodating the control unit 140 inside the control housing 32. According to another example, the control unit 140 is directly provided on the outer wall surface 21a of the bottom wall 21 of the housing 20 without the intermediary of the bottom wall 32a of the control housing 32. The control unit 140 comprises a board 142 on which control components 141 such as an inverter circuit are mounted, and a board-side connector 143 provided on the board 142. The board-side connector 143 is connectable to another end portion of each terminal pin 133.

The control unit 140 is assembled inside the control housing 32, whereby the board-side connector 143 is connected to each terminal pin 133. As a result, the lead-out wires 115 are electrically connected to the control unit 140. Driving electrical power can be supplied from the control unit 140 to the motor 100.

The arrangement of the cluster block 120 in relation to the housing 20 will be described in detail next.

See fig. 2. As stated above, the cluster block 120 is disposed in the space Sp between the bottom wall 21 and the first insulator 112 (the arrangement space Sp). Specifically, the cluster block 120 is positioned with a gap ga (clearance ga) from the bottom wall 21.

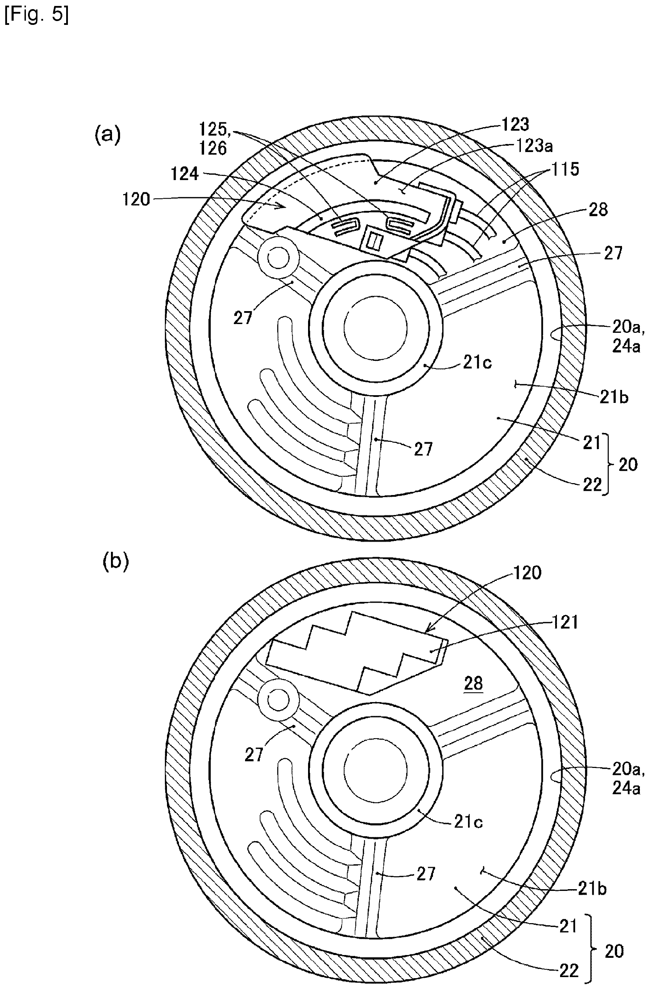

As shown in fig. 1, 5(a) and 5(b), the bearing holding portion 21c for holding the bearing 43 (second bearing 43), and a plurality of (e.g. three) reinforcing ribs 27 extending radially from the bearing holding portion 21c as far as the circumferential wall 22 of the housing 20 in order to reinforce the bottom wall 21 are integrally formed with the inner wall surface 21b of the bottom wall 21 of the housing 20.

A space 28 surrounded by the inner wall surface 21b of the bottom wall 21, the circumferential wall 22, the bearing holding portion 21c, and two of the plurality of reinforcing ribs 27 is thus formed inside the housing 20. That is to say, the space 28 for receiving the cluster block 120 is formed in the inner wall surface 21b of the bottom wall 21. The space 28 may be referred to as the "cluster block receiving portion 28", as appropriate. The cluster block 120 is disposed in the cluster block receiving portion 28.

The cluster block 120 can be very efficiently assembled by effectively utilizing the narrow space inside the housing 20, by providing the cluster block receiving portion 28 in the interior of the housing 20. It is therefore possible to achieve a reduction in the size of the electric compressor 10.

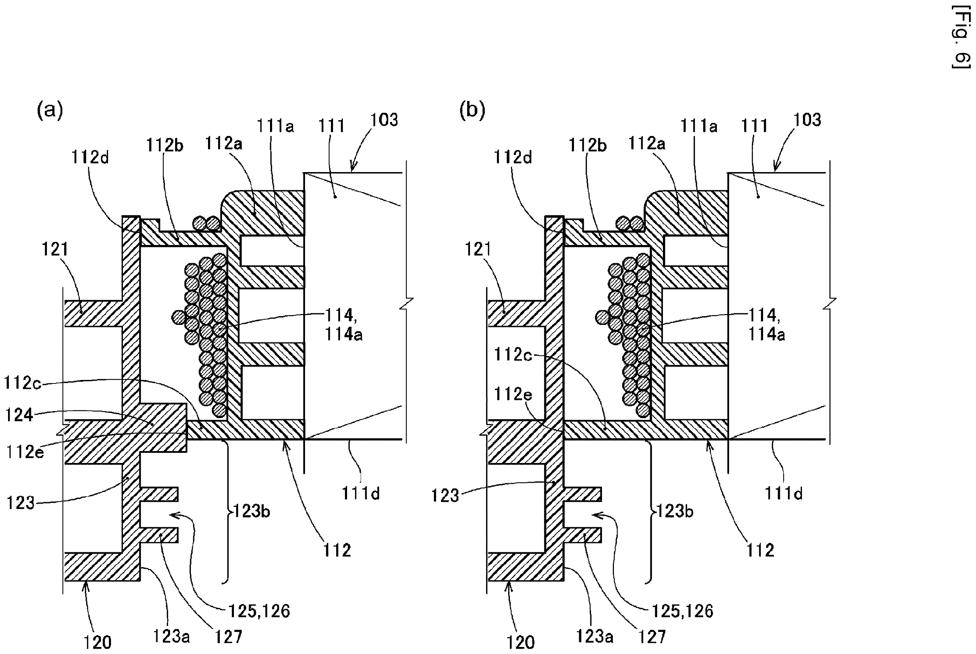

As shown in fig. 6(a) and (b), the terminal accommodating portion 121 of the cluster block 120 has a bottom plate 123 facing the first insulator 112. A bottom surface 123a of the bottom plate 123 may be referred to as the "facing surface 123a facing the stator 103".

At least one of the first support face 112d and the second support face 112e is positioned further to the facing surface 123a side of the cluster block 120 than axial end faces of the coil ends 114a of the coils 114.

As shown in fig. 6(a), for example, with respect to the base portion 112a, the length of the outer circumferential-side first edge portion 112b is greater than the length of the inner circumferential-side second edge portion 112c. Accordingly, the first support face 112d is positioned further to the facing surface 123a side of the cluster block 120 than the second support face 112e. Moreover, the first support face 112d is positioned further to the facing surface 123a side of the cluster block 120 than the axial end faces of the coil ends 114a.

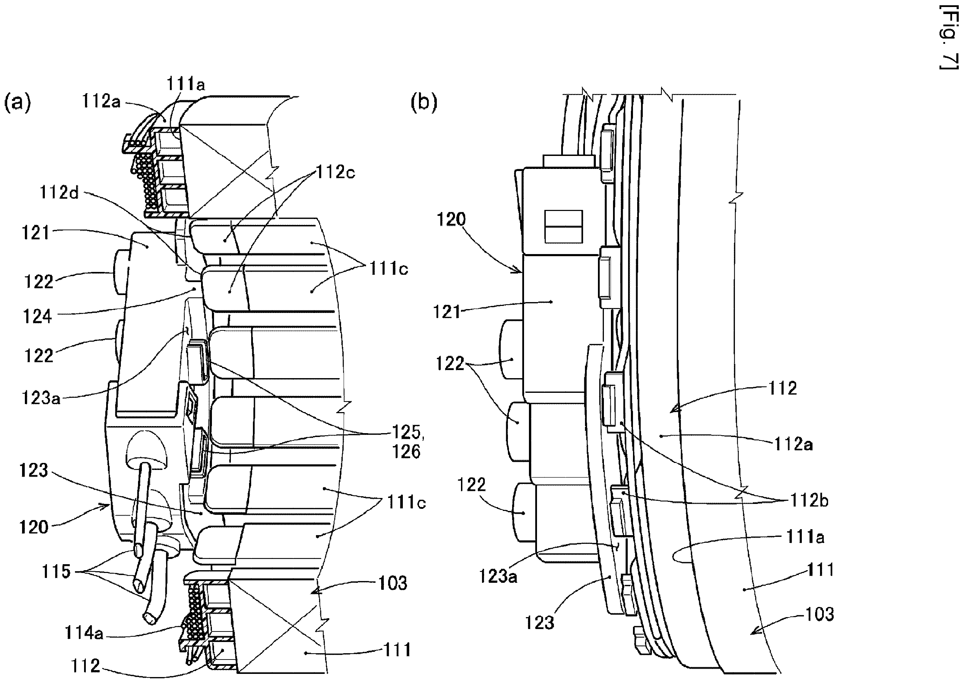

In this case, as shown in fig. 6(a), 7(a) and 7(b), the cluster block 120 comprises a protrusion 124 protruding from the facing surface 123a toward the second support face 112e. The amount by which the protrusion 124 protrudes corresponds to a difference in a distance between the first support face 112d and the second support face 112e. By providing the protrusion 124, the cluster block 120 can be supported by the first support face 112d and the inner circumferential-side second support face 112e.

Furthermore, as shown in fig. 6(b), for example, the position of the first support face 112d and the position of the second support face 112e in relation to the facing surface 123a of the cluster block 120 are the same, and the first support face 112d and the second support face 112e are positioned further to the facing surface 123a side of the cluster block 120 than the axial end faces of the coil ends 114a. The cluster block 120 can be supported by the first support face 112d and the inner circumferential-side second support face 112e. In this case, the cluster block 120 does not comprise the protrusion 124.

As shown in fig. 2, example 1 employs shrink fitting as the method for fixing the stator core 111 to the inner circumferential surface 20a (first inner circumferential surface 24a) of the housing 20. The cluster block 120 is disposed between the bottom wall 21 of the housing 20 and the first insulator 112. When the housing 20 is shrink fitted to the stator core 111, the cluster block 120 is therefore inserted into the housing 20 together with the stator 103. In this process, the cluster block 120 needs to be appropriately arranged so as not to contact the heated housing 20.

In this regard, according to example 1, the cluster block 120 is supported by means of a holding jig 150 during shrink fitting, as shown in fig. 2, 4 and 8. For this purpose, the cluster block 120 has a mating portion 125 enabling mating so that the cluster block 120 can be held by the holding jig 150.

Specifically, the cluster block 120 has the mating portion 125 capable of mating along the axis CL1 (center line CL1) of the rotor 102 with the holding jig 150 for holding the cluster block 120 in a state of being positioned with a gap ga (clearance ga) from the bottom wall 21. The mating portion 125 is formed on the bottom surface 123a (facing surface 123a) of the bottom plate 123 of the cluster block 120. The mating portion 125 can be mated with the holding jig 150 which is set on the stator 103 side.

The cluster block 120 thus has the mating portion 125 enabling mating so that the cluster block 120 can be held by the holding jig 150 by means of a frictional force therebetween. The cluster block 120 in a state of being positioned with the gap ga (clearance ga) shown in fig. 2 from the bottom wall 21 of the housing 20 can therefore be held in an optimum state without inclination by means of the holding jig 150. Accordingly, the cluster block 120 can be appropriately arranged so as not to contact the housing 20. Even if the structure for fixing the stator core 111 to the inner circumferential surface 20a of the housing 20 (the first inner circumferential surface 24a of the first accommodating chamber 24) comprises fixing by means of an interference fit employing a shrink fit process, the position of the cluster block 120 can be held by means of the holding jig 150 so that the cluster block 120 does not contact the heated housing 20. As a result, contact between the housing 20 and the cluster block 120 is avoided so that performance in terms of protecting the cluster block 120 can be improved.

In addition, the mating configuration of the mating portion 125 with the holding jig 150 constitutes a "light press fit", which is a mating configuration capable of holding the mated state by means of a frictional force therebetween and also enabling detachment from each other by means of a detaching force. The cluster block 120 can therefore be stably held by means of the holding jig 150 in the space Sp between the bottom wall 21 and the stator core 111 while also being removable and accurately positionable.

Here, a summary of the relationship between the first insulator 112 and the cluster block 120 will again be described with reference to fig. 6(a) and 6(b). The cluster block 120 comprises the facing surface 123a facing the stator 103. The stator 103 comprises the insulator 112 (first insulator 112) which is provided on the end face 111a of the stator core 111 on the control unit 140 side and is sandwiched between the stator core 111 and the coils 114. The insulator 112 comprises the outer circumferential-side first support face 112d and the inner circumferential-side second support face 112e capable of supporting the facing surface 123a of the cluster block 120.

The facing surface 123a of the cluster block 120 can therefore be supported (movement of the cluster block 120 can be restricted) by means of the first and second support faces 112d, 112e of the insulator 112 when the holding jig 150 (see fig. 4) is withdrawn from the mating portion 125 of the cluster block 120 after the stator core 103 has been assembled with (fixed to) the housing 20. It is therefore easy to withdraw the holding jig 150 from the cluster block 120.

Moreover, the first and second support faces 112d, 112e are positioned further to the facing surface 123a side than the coil ends 114a of the coils 114. The cluster block 120 therefore does not touch the coil ends 114a when the holding jig 150 is withdrawn, so there are no concerns regarding damage to the coil ends 114a.

Additionally, the cluster block 120 is supported at the two locations of the outer circumferential-side first support face 112d and the inner circumferential-side second support face 112e, and the cluster block 120 can therefore be stably supported. Consequently, the cluster block 120 which is disposed toward the direction of the axis CL1 (center line CL1) of the rotor 102 can be stably supported by means of the insulator 112 so that the cluster block 120 does not contact the inner circumferential surface 20a (first inner circumferential surface 24a) of the heated housing 20.

In addition, referring also to fig. 2, the cluster block 120 can be supported in the axial direction (the direction along the center line CL1 of the stator core 111) by means of the first and second support faces 112d, 112e when the terminal pin 133 of the sealed terminal 130 is inserted into the connection terminal 116 of the cluster block 120. Consequently, the sealed terminal 130 can be easily assembled with the connection terminal 116.

In order to reduce the overall length of the electric compressor 10, the facing surface 123a of the cluster block 120 is brought close to the stator 103, as shown in fig. 2. It is therefore not possible to ensure sufficient mating space between the mating portion 125 and the holding jig 150 (see fig. 4).

In response to this, according to example 1, as shown in fig. 6(a) and 6(b), the facing surface 123a of the cluster block 120 is positioned as far as radially inside the cylindrical stator core 111 (radially inward from the inner circumferential surface 111d of the stator core 111). The mating portion 125 is formed on a radially inside part 123b of the facing surface 123a (a part 123b radially inward from the inner circumferential surface 111d of the stator core 111). The mating portion 125 is preferably configured by at least one recessed mating recess 126 (a pair of mating recesses 126, 126 in the example). As shown in fig. 2, the mating recesses 126 open to the second insulator 113 side along the center line CL1 of the stator core 111, and are capable of mating with the holding jig 150.

The radially inside part 123b may extend radially inward to the extent that there is no interference with the end face 102a of the rotor 102 shown in fig. 2. It is therefore possible to ensure sufficient mating space between the mating portion 125 and the holding jig 150. The position and attitude of the cluster block 120 can be stably established by means of the holding jig 150, and very accurate positioning is possible as a result.

As shown in fig. 4, 8 and 9(a)-(c), the mating recesses 126, 126 are configured by a pair of arc-shaped grooves centered on the axis CL1 (center line CL1) of the rotor 102, and are positioned at a circumferential interval Ln1 from each other.

The pair of mating recesses 126, 126 (mating grooves 126, 126) comprising a groove configuration may be configured by grooves of a pair of protrusions 127, 127 having a U-shaped cross section which protrude from the facing surface 123a of the cluster block 120. In this case, the pair of protrusions 127, 127 are arranged so that openings of the U-shaped cross sections face in opposite directions. The mating recesses 126, 126 are configured by the grooves of the protrusions 127, 127, and the depths of the groove-shaped mating recesses 126, 126 can therefore be freely set without being restricted by the thickness of the bottom plate 123.

The holding jig 150, which has the function of a jig for supporting the stator 103, comprises: a cylindrical jig base portion 151 capable of mating with the inner circumferential surface 11 1d of the stator core 111; and a cylindrical block holding portion 152 extending from a tip end face 151a of the jig base portion 151 to the cluster block 120 side. The block holding portion 152 has a cutout 153 where a portion has been cut out in the circumferential direction. An interval Ln2 between edges 153a, 153a on both circumferential sides which form the cutout 153 is the same as the interval Ln1 between the groove-shaped mating recesses 126, 126. The mating recesses 126, 126 of the cluster block 120 mate with tip end parts of the block holding portion 152 of the holding jig 150.

Ends 126a, 126a of the mating recesses 126, 126 fit together with the edges 153a, 153a on both circumferential sides of the cutout 153, whereby the circumferential position of the cluster block 120 in relation to the block holding portion 152 is established. That is to say, the relative position of the cluster block 120 with respect to the block holding portion 152 can be established while misalignment therebetween can also be controlled.

The groove-shaped mating recesses 126, 126 (mating grooves 126, 126) are mated with the holding jig 150 whereby it is possible to restrict relative movement of the cluster block 120 with respect to the holding jig 150 in both the direction orthogonal to the axis CL1 of the rotor 102 and the rotation direction about the axis CL1 of the rotor 102. The cluster block 120 can therefore be positioned very accurately in relation to the holding jig 150.

In addition, a positioning bar 154 more preferably extends from the holding jig 150 toward the cluster block 120. The positioning bar 154 positions a side face of the terminal accommodating portion 121 of the cluster block 120 so that the cluster block 120 can be positioned even more accurately in relation to the holding jig 150.

It should be noted that the mating grooves 126, 126 of the cluster block 120 may also have a configuration which is indented from the facing surface 123a of the cluster block 120, for example.

The method for assembling the electric compressor 10 having the configuration above will be described next.

A summary description of the electric compressor 10 relating to the assembly method of this example 1 is as follows.

As shown in fig. 1, the electric compressor 10 comprises:
a compression mechanism 50 for compressing a gas;
a motor 100 for driving the compression mechanism 50, the motor 100 comprising a rotor 102, a cylindrical stator core 111 of a stator 103 disposed radially outside the rotor 102, an insulator 112 (first insulator 112) provided on an end face 111a (end face 111a on a control unit 140 side) of the stator core 111, and a coil 114 wound around the stator core 111 and the insulator 112;
a housing 20 which is a bottomed cylindrical member having the stator core 111 fixed to an inner circumferential surface 20a (first inner circumferential surface 24a) thereof;
a control unit 140 which is provided on an outer wall surface 21a of a bottom wall 21 of the housing 20 and controls driving of the motor 100;
a connection terminal 116 (see fig. 2) which is disposed on an inner wall surface 21b side of the bottom wall 21 and is electrically connected to the coil 114;
a sealed terminal 130 which is attached to the bottom wall 21 of the housing 20 and penetrates the bottom wall 21 while also electrically connecting the control unit 140 and the stator 103; and
a cluster block 120 which is disposed in a space Sp between the bottom wall 21 and the first insulator 112 and covers a connecting portion 116a (see fig. 2) between the connection terminal 116 and the sealed terminal 130.

The cluster block 120 comprises a mating portion 125 capable of mating along an axis CL1 of the rotor 102 with a holding jig 150 (see fig. 4) for holding the cluster block 120.

The method for fixing the stator core 111 to the housing 20 by means of shrink fitting is carried out by means of at least the following preparation step, holding step, fitting step, fixing step, and detachment step.

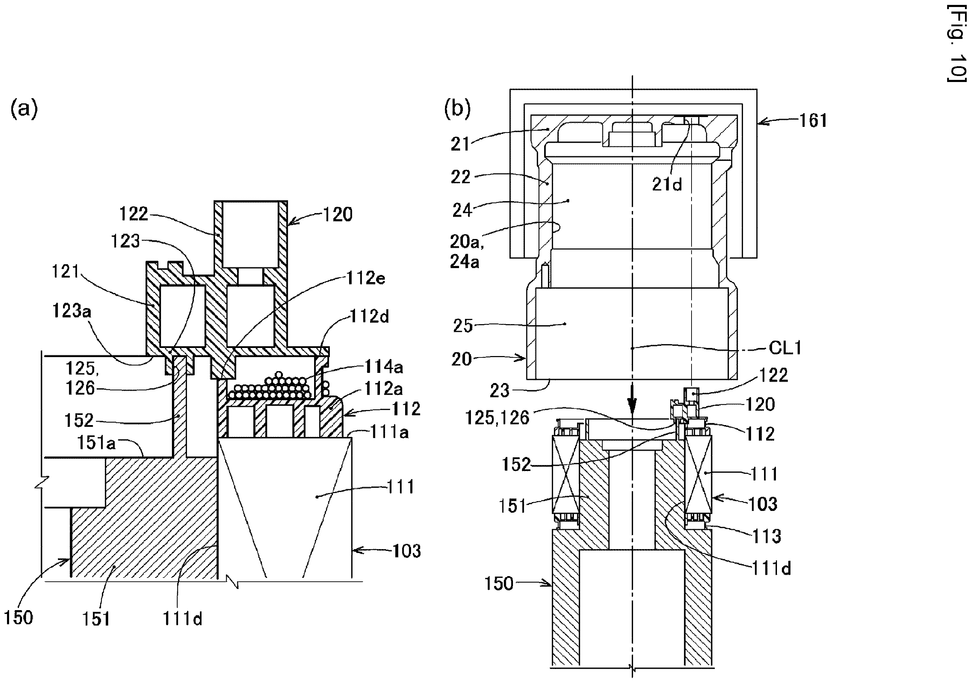

As shown in fig. 10(a), a step (preparation step) in which the stator 103 comprising the cluster block 120 is prepared is carried out first of all. The cluster block 120 is connected to the coils 114 by means of the lead-out wires 115 (see fig. 4).

After this, a step (holding step) is carried out, in which the holding jig 150 is inserted into the mating portion 125 of the cluster block 120 so that the cluster block 120 is positioned with a gap ga from the bottom wall 21 of the housing 20, as in fig. 2, and the cluster block 120 is held by the holding jig 150 (see fig. 10(a)).

As an example of the holding step, the stator 103 is first of all fitted to the holding jig 150. As a result, the stator core 111 is positioned and set in relation to the jig base portion 151 of the holding jig 150. In this state, the mating portion 125 (mating grooves 126) of the cluster block 120 are mated with the tip end parts of the block holding portion 152. As a result of the holding step, the cluster block 120 is positioned on the holding jig 150. At the same time, the facing surface 123a of the cluster block 120 is supported by means of the support faces 112d, 112e of the first insulator 112.

After the holding step, as shown in fig. 10(b), a step (fitting step) is carried out, in which the housing 20 in a state of having been thermally expanded by means of heating is fitted to the stator 103 in a state in which the cluster block 120 is held by means of the holding jig 150.

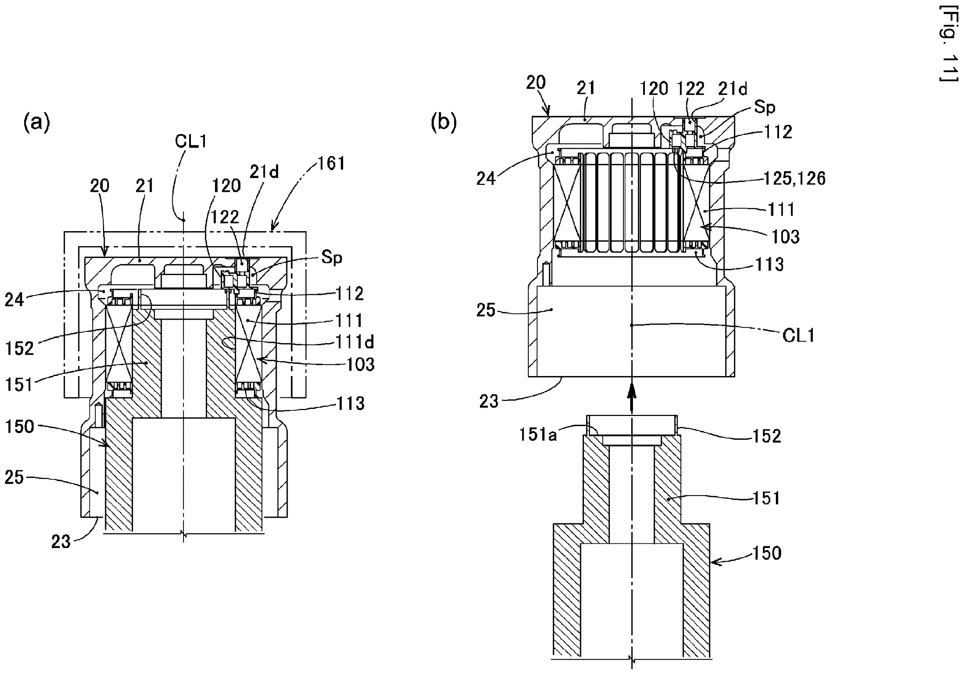

As an example of the fitting step, the relative positions of the housing 20 and a heater 161 are set with respect to the holding jig 150, and the housing 20 and the heater 161 can be moved along the center line CL1 of the stator core 111. The heater 161 first of all heats the area around the first accommodating chamber 24 of the housing 20 under preset heating conditions. The housing 20 which has been heated up to a predetermined heating temperature is then fitted to the outer circumferential surface of the stator core 111. As a result of the fitting step, as shown in fig. 11(a), the housing 20 is fitted to the stator core 111.

After this, as shown in fig. 11(a), a step (fixing step) is carried out, in which the housing 20 is returned to normal temperature and thereby contracted so that the stator core 111 is fixed to the housing 20. As an example of the fixing step, the heater 161 is first of all removed from the housing 20. The housing 20 is then returned to normal temperature by means of cooling such as air cooling (including natural cooling). As a result of the fixing step, the housing 20 is shrink fitted to the stator core 111. Here, normal temperature includes a normal temperature of 20°C±15°C defined in Japanese Industrial Standards (JIS Z 8703), but normal temperature is not necessarily limited to this provided that the temperature is suitable for shrink fitting the housing 20 to the stator core 111.

After this, as shown in fig. 11(b), a step (detachment step) is carried out, in which the holding jig 150 is detached from the mating portion 125 of the cluster block 120. As an example of the detachment step, the housing 20 is pulled up from the holding jig 150. As a result, the mating grooves 126, 126 of the cluster block 120 are withdrawn from the tip end parts of the block holding portion 152. As shown in fig. 10(a), the facing surface 123a of the cluster block 120 is supported by means of the support faces 112d, 112e of the first insulator 112, and the mating grooves 126, 126 of the cluster block 120 are therefore easy to withdraw from the tip end parts of the block holding portion 152.

After this, as shown in fig. 11(b), a step (terminal assembly step) is carried out, in which the sealed terminal 130 (see fig. 4) is assembled with the cluster block 120, completing the assembly method. An example of the terminal assembly step is as follows. As a result of carrying out the fixing step above, the terminal protectors 122 are inserted with a gap into the through-holes 21d in the bottom wall 21 of the housing 20. As shown in fig. 4, the sealed terminal 130 is inserted into the through-hole 21d from the outer wall surface 21a side of the bottom wall 21 and introduced into the connecting portion 116a inside the cluster block 120. The sealed terminal 130 can be assembled with the cluster block 120 as a result. Moreover, the cluster block 120 can be supported in the axial direction (the direction along the center line CL1 of the stator core 111) by means of the first and second support faces 112d, 112e when the sealed terminal 130 is inserted into the connection terminal 116 of the cluster block 120. Consequently, the sealed terminal 130 can be easily assembled with the connection terminal 116.

It should be noted that the terminal assembly step should be carried out after the fixing step shown in fig. 11(a). For example, the terminal assembly step is carried out between the fixing step shown in fig. 11(a) and the detachment step shown in fig. 11(b). In this case, the cluster block 120 is in a state of being positioned by the holding jig 150. The sealed terminal 130 can therefore be assembled with the cluster block 120 even more easily.

As shown in fig. 10(a), the bottom surface of the mating recesses 126 (bottom surface 123a of the bottom plate 123) abuts the tip end face of the block holding portion 152, thereby determining the height of the cluster block 120 in relation to the tip end face 151a of the holding jig 150. The position of the stator core 111 in relation to the holding jig 150 in the center line CL1 direction is managed, as shown in fig. 10(b). When the housing 20 is fitted to the stator core 111, the position of the housing 20 in relation to the holding jig 150 in the center line CL1 direction is managed, as shown in fig. 11(a). Accordingly, the gap ga between the cluster block 120 and the bottom wall 21 of the housing 20 shown in fig. 2 is necessarily determined and can be managed with sufficiently good accuracy.

A summary description of the assembly method above is as follows.

As shown in fig. 2 and 4, the cluster block 120 has the mating portion 125 enabling mating so that the cluster block 120 can be held by the holding jig 150. The cluster block 120 in a state of being positioned with the gap ga (clearance ga) from the bottom wall 21 of the housing 20 can therefore be held in an optimum state by means of the holding jig 150 without inclination. Accordingly, when the stator core 111 is fixed to the heated housing 20 by means of shrink fitting, the cluster block 120 can be appropriately arranged so as not to contact the heated housing 20. Performance in terms of protecting the cluster block 120 can be improved as a result.

Moreover, the mating portion 125 of the cluster block 120 is mated to an extent that the holding jig 150 can be detached from the mating portion 125.

Mating of the mating portion 125 with the holding jig 150 can thus be afforded by a "light press fit", which is mating capable of holding the mated state and also enabling detachment from each other by means of a detaching force. The cluster block 120 can therefore be stably held by means of the holding jig 150 in the space Sp between the bottom wall 21 and the first insulator 112 while also being removable and accurately positionable.

### <Example 2>

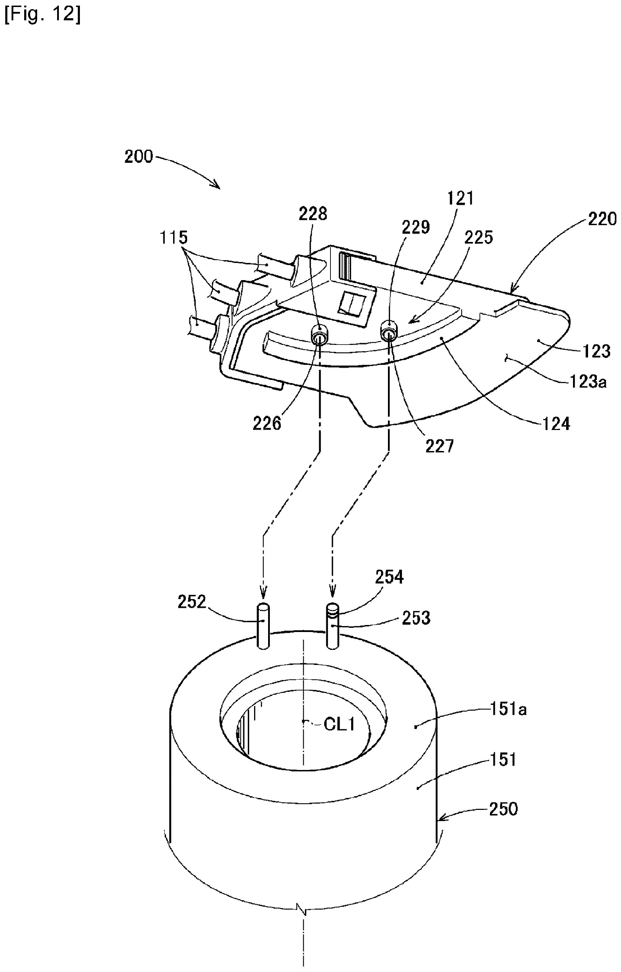

An electric compressor 200 according to example 2 will be described with reference to fig. 12-13.

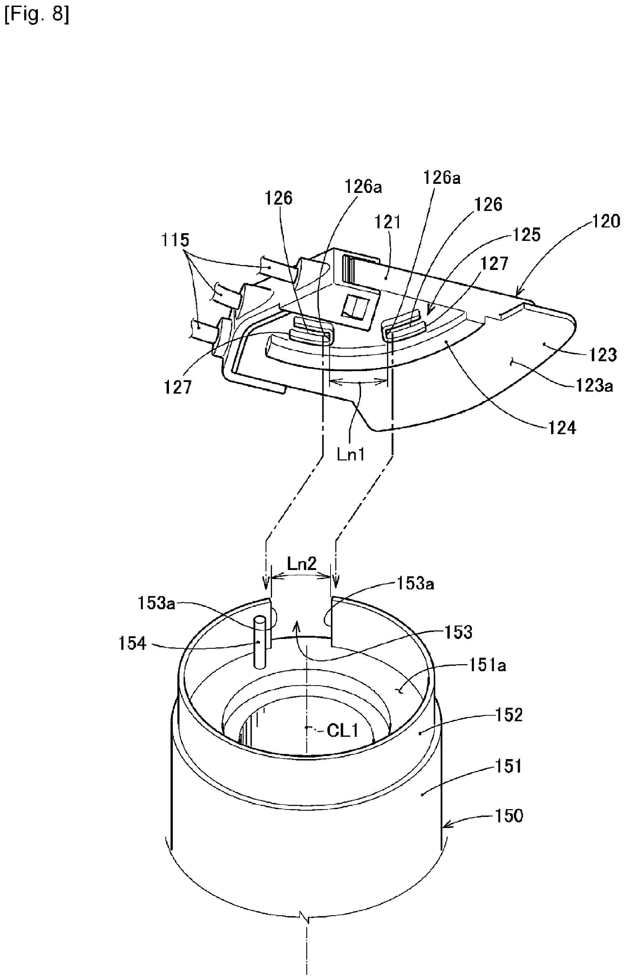

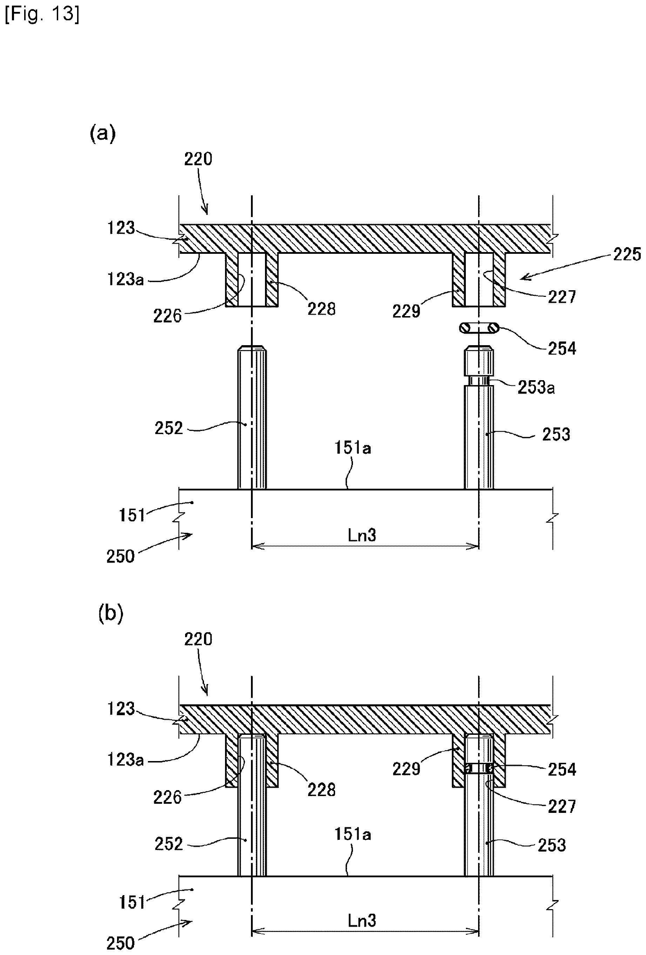

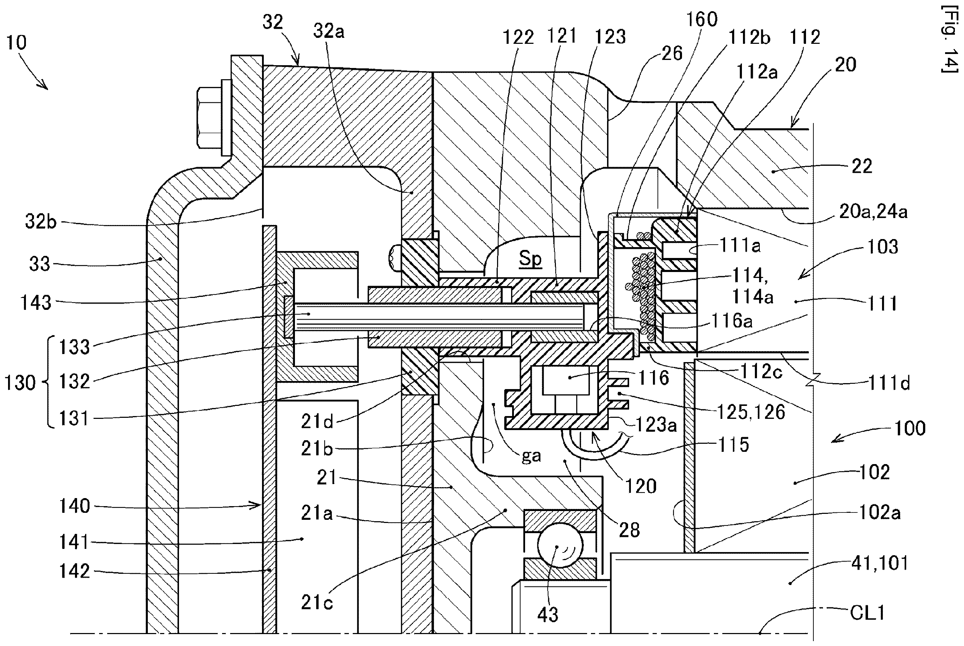

Fig. 12 is an exploded diagram showing a relationship of a holding jig 250 and a cluster block 220 of the electric compressor 200 according to example 2, corresponding to fig. 8 illustrating the relationship of the holding jig 150 and the cluster block 120 of example 1 described above. Fig. 13(a) is an exploded diagram illustrating a relationship of a mating portion 225 and the holding jig 250 shown in fig. 12. Fig. 13(b) is a view in cross section illustrating a mated state of the mating portion 225 and the holding jig 250 shown in fig. 13(a).

The cluster block 220 of the electric compressor 200 according to example 2 is characterized by comprising a mating portion 225 capable of mating along the axis CL1 of the rotor 102 (see fig. 2) with a holding jig 250 for holding the cluster block 220. The mating portion 225 corresponds to the mating portion 125 of example 1 shown in fig. 8. The holding jig 250 corresponds to the holding jig 150 of example 1 shown in fig. 8.

Other fundamental components and the assembly method are common to those of the electric compressor 10. The parts in common with the electric compressor 10 bear the same reference symbols and will not be described in detail again.

Specifically, as shown in fig. 12, 13(a) and 13(b), the mating portion 225 is configured by recessed mating recesses 226, 227 formed on the radially inside part 123b (see fig. 6(a)) of the facing surface 123a of the cluster block 220. The mating recesses 226, 227 open to the second insulator 113 side (see fig. 1) along the center line CL1 of the rotor 102 (see fig. 2), and are capable of mating with the holding jig 250. The mating recesses 226, 227 are positioned at an interval Ln3 from each other.

The mating recesses 226, 227 are configured by a pair of holes which correspond to the mating recesses 126, 126 of example 1 shown in fig. 8.

The pair of mating recesses 226, 227 (mating holes 226, 227) comprising a round hole-shaped configuration may be configured, for example, by bottomed annular holes of a pair of protrusions 228, 229 which protrude from the facing surface 123a of the cluster block 220. The recesses 226, 227 are configured by the holes of the protrusions 228, 229, and the depths of the mating recesses 226, 227 can therefore be freely set without being restricted by the thickness of the bottom plate 123.

In addition, the pair of mating recesses 226, 227 are accommodated by the pair of protrusions 228, 229, whereby the relative position of the cluster block 220 with respect to the holding jig 250 can be established while misalignment therebetween can also be controlled.

The holding jig 250, which has the function of a jig for supporting the stator 103, comprises: the same jig base portion 151 as in example 1; and bar-shaped (e.g., round bar-shaped, columnar or tubular) block holding portions 252, 253 extending from the tip end face 151a of the jig base portion 151 to the cluster block 220 side. The interval Ln3 between between the block holding portions 252, 253 is the same as the interval Ln3 between the hole-shaped mating recesses 226, 227.

The mating recesses 226, 227 of the cluster block 220 thus mate with the block holding portions 252, 253 of the holding jig 250.

The hole-shaped mating recesses 226, 227 (mating holes 226, 227) are mated with the holding jig 250 whereby it is possible to restrict relative movement of the cluster block 220 with respect to the holding jig 250 in both the direction orthogonal to the axis CL1 of the rotor 102 and the rotation direction about the axis CL1 of the rotor 102. The cluster block 220 can therefore be positioned very accurately in relation to the holding jig 250.

It should be noted that the mating recesses 226, 227 (mating holes 226, 227) of the cluster block 220 may have a configuration which is indented from the facing surface 123a of the cluster block 220, for example.

Mating of the mating portion 225 with the holding jig 250 constitutes a "light press fit", which is mating capable of holding the mated state by means of a frictional force therebetween and also enabling detachment from each other by means of a detaching force.

More specifically, the following configurations may be given by way of example. It should be noted that either one of the pair of mating recesses 226, 227 serves as a first mating recess 226, with the other serving as a second mating recess 227. Either one of the pair of block holding portions 252, 253 serves as a first block holding portion 252, with the other serving as a second block holding portion 253. The mating configuration of the first mating recess 226 and the first block holding portion 252 is referred to as a first mating configuration. The mating configuration of the second mating recess 227 and the second block holding portion 253 is referred to as a second mating configuration. Furthermore, the pair of mating recesses 226, 227 have the same diameter, and the pair of block holding portions 252, 253 also have the same diameter. It should be noted that this is not limiting.

In a first example, either one of the first mating configuration and the second mating configuration is a light press fit configuration, with the other being a clearance fit configuration. For example, this can be achieved by making a mating tolerance of the first mating different from a mating tolerance of the second mating.

Furthermore, in the first example, as shown in fig. 12, 13(a) and 13(b), the light press fit configuration may be achieved by interposing an elastic member 254 in either one of the first mating configuration and the second mating configuration. For example, a clearance fit configuration is used for mating of the first mating recess 226 and the first block holding portion 252. A configuration with an annular elastic member 254 such as an O-ring interposed is used for mating of the second mating recess 227 and the second block holding portion 253. The elastic member 254 is fitted in a groove 253a provided on an outer circumferential surface of the second block holding portion 253. This results in the "light press fit" configuration (second mating configuration), which is mating capable of holding the mated state by means of a frictional force between an inner circumferential surface of the second mating recess 227 and an outer circumferential surface of the elastic member 254, and also enabling detachment from each other by means of a detaching force.

In a second example, both the first mating configuration and the second mating configuration are light press fit configurations. For example, this can be achieved by making the mating tolerance of the first mating the same as the mating tolerance of the second mating. Furthermore, in the second example, the first mating configuration can be made the same as the second mating configuration of the first example in which the elastic member 254 is interposed. As a result, both the first mating configuration and the second mating configuration are light press fit configurations.

Other actions and effects are the same as those of the electric compressor 10 and the method of assembly thereof according to example 1 described above.

It should be noted that the electric compressors 10, 200 according to the present invention are not limited to the examples, provided that the actions and effects of the present invention are demonstrated.

The housing 20 may be configured so that only the motor 100 is housed therein, without the compression mechanism 50 being housed therein.

The compression mechanism 50 is not limited to a scroll compression mechanism configuration, provided that the compression mechanism 50 is driven by means of the motor 100 in order to compress a gas (e.g., a gaseous refrigerant).

### [Industrial Applicability]

The electric compressors 10, 200 according to the present invention (including the electric compressors 10, 200 resulting from the assembly method of the present invention) are suitable for use in a refrigeration cycle of a vehicle air conditioning device.

### [Key to Symbols]

10 Electric compressor
20 Housing
20a Inner circumferential surface
21 Bottom wall
21a Outer wall surface
21b Inner wall surface
21c Bearing holding portion
21d Through-hole
22 Circumferential wall
24 First accommodating chamber
24a First inner circumferential surface
28 Cluster block receiving portion
50 Compression mechanism
100 Motor
102 Rotor
102a End face
103 Stator
111 Stator core
111a Control unit-side end face
111b Compression mechanism-side end face
112 First insulator
112d Outer circumferential-side first support face
112e Inner circumferential-side second support face
114 Coil
114a Coil end
115 Lead-out wire
116 Connection terminal
116a Connecting portion
120 Cluster block
123 Bottom plate
123a Facing surface facing stator
123b Radially inside part
125 Mating portion
126 Mating recess (mating groove)
130 Sealed terminal
140 Control unit
150 Holding jig
152 Block holding portion
200 Electric compressor
220 Cluster block
225 Mating portion
226 Mating recess (mating hole)
227 Mating recess (mating hole)
250 Holding jig
CL1 Axis of rotor
ga Gap (clearance) from bottom wall to cluster block
Sp Space between bottom wall and stator core

## Claims

1. An electric compressor (10; 200) comprising: a compression mechanism (50) for compressing a gas, a motor (100) for driving the compression mechanism (50), a control unit (140) for controlling driving of the motor (100), and a housing (20) which is a bottomed cylindrical member for internally housing the motor (100);
the control unit (140) being provided on an outer wall surface (21a) of a bottom wall (21) of the housing (20);
the motor (100) comprising a rotor (102) whose rotational axis is aligned with a longitudinal direction of the housing (20), and a cylindrical stator (103) disposed radially outside the rotor (102);
the stator (103) including:
a cylindrical stator core (111) which is positioned with a space from the bottom wall (21) and is also fixed to an inner circumferential surface (20a) of the housing (20),
a coil (114) wound around the stator core (111), and
a connection terminal (116) which is disposed on the bottom wall (21) side and is electrically connected to the coil (114);
a sealed terminal (130) which is provided in and penetrates the bottom wall (21) of the housing (20) and also electrically connects the control unit (140) and the stator (103); and
a connecting portion (116a) between the connection terminal (116) and the sealed terminal (130) being covered by a cluster block (120; 220) which is disposed in a space (Sp) between the bottom wall (21) and the stator core (111), the electric compressor being **characterized in that**
the cluster block (120; 220) has a mating portion (125; 225) capable of mating along an axis (CL1) of the rotor (102) with a holding jig (150; 250) for holding the cluster block (120; 220) in a state of being positioned with a gap (ga) from the bottom wall (21).

2. The electric compressor as claimed in claim 1, **characterized in that** mating of the mating portion (125; 225) with the holding jig (150; 250) constitutes a mating configuration capable of holding a mated state by means of a frictional force therebetween and also enabling detachment from each other by means of a detaching force.

3. The electric compressor as claimed in claim 2, **characterized in that** the cluster block (120; 220) comprises a facing surface (123a) facing the stator (103);
the stator (103) further comprises an insulator (112) which is provided on an end face (111a) of the stator core (111) on the control unit (140) side, and is sandwiched between the stator core (111) and the coil (114); and
the insulator (112) comprises an outer circumferential-side first support face (112d) and an inner circumferential-side second support face (112e) capable of supporting the facing surface (123a) of the cluster block (120; 220).

4. The electric compressor as claimed in claim 3, **characterized in that** the facing surface (123a) of the cluster block (120; 220) is positioned up to a radially inner side of the cylindrical stator core (111); and
the mating portion (125; 225) is configured by recessed mating recesses (126, 126; 226, 227) formed on a radially inside part (123b) of the facing surface (123a).

5. The electric compressor as claimed in claim 4, **characterized in that** the mating recesses (126, 126) are configured by a pair of arc-shaped grooves centered on the axis (CL1) of the rotor (102), and are positioned at a circumferential interval (Ln1) from each other.

6. The electric compressor as claimed in claim 4, **characterized in that** the mating recesses (226, 227) are configured by a pair of holes, and are positioned at an interval (Ln3) from each other.

7. The electric compressor as claimed in any one of claims 1 to 4, **characterized in that** a cluster block receiving portion (28) for receiving the cluster block (120; 220) is formed on an inner wall surface (21b) of the bottom wall (21) of the housing (20); and
the cluster block (120; 220) is disposed in the cluster block receiving portion (28).

8. A method for assembling an electric compressor (10; 200) comprising: a compression mechanism (50) for compressing a gas;
a motor (100) for driving the compression mechanism (50), the motor (100) comprising a rotor (102), a cylindrical stator core (111) of a stator (103) disposed radially outside the rotor (102), an insulator (112) provided on an end face (111a) of the stator core (111), and a coil (114) wound around the stator core (111) and the insulator (112);
a housing (20) which is a bottomed cylindrical member having the stator core (111) fixed to an inner circumferential surface (20a) thereof;
a control unit (140) which is provided on an outer wall surface (21a) of a bottom wall (21) of the housing (20) and controls driving of the motor (100);
a connection terminal (116) which is disposed on an inner wall surface (21b) side of the bottom wall (21) and is electrically connected to the coil (114);
a sealed terminal (130) which is attached to the bottom wall (21) of the housing (20) and penetrates the bottom wall (21) while also electrically connecting the control unit (140) and the stator (103); and
a cluster block (120; 220) which is disposed in a space (Sp) between the bottom wall (21) and the insulator (112) and covers a connecting portion (116a) between the connection terminal (116) and the sealed terminal (130),
the cluster block (120; 220) comprising a mating portion (125; 225) capable of mating along an axis (CL1) of the rotor (102) with a holding jig (150; 250) for holding the cluster block (120; 220), the method for assembling an electric compressor being **characterized by** comprising:
a step in which the stator (103) comprising the cluster block (120; 220) is prepared;
after this, a step in which the holding jig (150; 250) is inserted into the mating portion (125; 225) of the cluster block (120; 220) so that the cluster block (120; 220) is positioned with a gap (ga) from the bottom wall (21) of the housing (20), and the cluster block (120; 220) is held by the holding jig (150; 250);
after this, a step in which the housing (20) in a state of having been thermally expanded by means of heating is fitted to the stator (103) in a state in which the cluster block (120; 220) is held by means of the holding jig (150; 250);
after this, a step in which the housing (20) is returned to normal temperature and thereby contracted so that the stator core (111) is fixed to the housing (20); and
after this, a step in which the holding jig (150; 250) is detached from the mating portion (125; 225) of the cluster block (120; 220).
